# EUROPEAN PATENT APPLICATION

(11) **EP 2 899 642 A1**
(43) Date of publication of application: **29.07.2015**
(21) Application number: 15158870.4
(22) Date of filing: 23.01.2013
(51) Int. Cl.: G06F 13/40

(54) **Transaction ordering to avoid bus deadlocks**

(30) Priority: 23.01.2012 US 201261589582 P; 06.11.2012 US 201213669629
(62) Divisional of application: 13707467.0
(71) Applicant: Qualcomm Incorporated, San Diego, CA 92121-1714 (US)
(72) Inventor: Nooney, Prudhvi N., San Diego, CA California 92121 (US); Ganasan, Jaya Prakash Subramaniam, San Diego, CA California 92121 (US); Wolford, Barry Joe, San Diego, CA California 92121 (US)
(74) Representative: Catesby, Olivia Joanne

(57) **Abstract**

Methods and apparatus for transaction ordering to avoid bus deadlocks are provided. In an exemplary method, custom routing rules for data transport are defined for data transport between a plurality of masters and a plurality of slaves via a plurality of interconnects, based on a network topology and traffic profile. In an example, the customized rule allows a request address to arbitrate in a first phase of arbitration at a first interconnect in the plurality of interconnects prior to receiving write data associated with the request address at a second interconnect in the plurality of interconnects, and does not allow the request address to arbitrate during a subsequent second phase of arbitration unless the request address beats other competing address requests.

## Description

### CLAIM OF PRIORITY UNDER 35 U.S.C. §119

This patent application claims priority to United States Provisional Patent Application No. 61/589,582, entitled "TRANSACTION ORDERING TO AVOID BUS DEADLOCKS", filed January 23, 2012, and assigned to the assignee hereof and hereby expressly incorporated by reference herein.

### FIELD OF DISCLOSURE

This disclosure relates generally to electronics, and more specifically, but not exclusively, to apparatus and methods for transaction ordering to mitigate bus deadlocks.

### BACKGROUND

In mobile systems-on-a-chip (SoC), chip performance is becoming increasingly important. A SoC integrated circuit (IC) is a system in which a group of circuits performing related functions are integrated onto, and fabricated upon, a single die or substrate. A SoC IC generally includes functional blocks of circuitry, such as, for example, microprocessors, digital signal processors, memory arrays, buffers, and so on. These functional blocks of circuitry are sometimes referred to as cores. The functional blocks are each electrically connected to an interconnect bus, within the SoC IC, over which the functional blocks exchange data with each other and any other devices connected to the bus.

In the SoC, functional blocks such as masters (i.e., initiators) communicate with functional blocks such as slaves (targets) via the interconnect bus (i.e., a network-on-a-chip (NoC), interconnect, bus, etc.) that provides an intersubsystem data transfer path. Masters issue requests for data (e.g., a request address) and receive requested data in response to the requests (e.g., write data). An example of a master is a processor core. Slaves receive the requests for data and provide the requested data to the requesting masters. Examples of slaves include a slave processor, a display device (e.g., a graphics processor), a memory (e.g., a cache memory), a memory interface, a peripheral, a peripheral interface, a user input and/or output device, a user input, and/or output device interface (e.g., a Universal Serial Bus port).

Contention between data transfers via the interconnect bus occurs when two or more masters and/or slaves attempt to place data on, or retrieve data from, the interconnect bus. In order to reduce the contention between data transfers via the interconnect bus, conventional techniques incorporate a bus controller within the SoC IC. It is common in a SoC to have multiple masters and multiple slaves communicating with each other via a single interconnect bus or interlinked NoCs. Thus, the bus controller typically includes an arbiter that selects which master is granted access to a slave at any given time. In a typical interconnect bus, the order in which data is written to a slave always follows a numerical order of the addresses. If a master "wins" arbitration, a write data path from the "winning" master to the slave to which a request is sent is locked to the "winning" master until all the data is received by the slave to which the request is sent. In other words, conventional arbiters only provide sequential access that produces bus deadlocks. As a result, conventional arbiters are relatively slow and inefficient, and can adversely affect system performance by producing the bus deadlocks.

A bus deadlock occurs when multiple data transfers have circular dependencies and/or conflicting priorities. The bus deadlock locks-up at least a part of the interconnect bus, leaving the affected part of the interconnect bus unable to transfer the locked-up data, unable to accept new request addresses, and/or unable to accept write data.

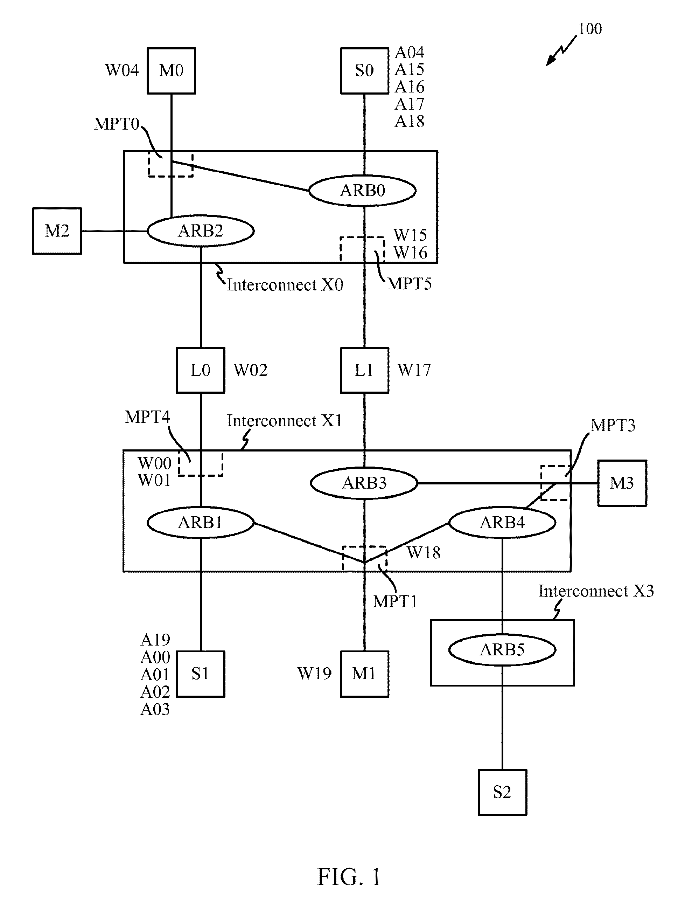

FIG. 1 depicts concerns about conventional methods and apparatus. In FIG. 1, and other examples described herein, data and data transport devices are represented by an alphanumeric code (e.g., W17, A16). The abbreviations used herein are defined by the following key:
X# indicates a specific interconnect bus and its unique identifying number.
M# indicates a specific Master/Initiator (e.g., microprocessor(s)) and its unique identifying number.
S# indicates an endpoint such as a Slave/Target (e.g., memory array(s)) and its unique identifying number.
L# indicates a link between two interconnect buses/NoCs and its unique identifying number.
MPT# indicates a port of an interconnect bus to which a master is coupled and its unique identifying number.
ARB# indicates a bus arbiter and its unique identifying number.
A# indicates a request address and its unique identifying number. The second digit reflects a master number of a master that generated a request associated with that address. For example, address A0# (e.g., A01) corresponds to a request from master number M0 and A1# (e.g., A14) corresponds to a request from master number M1. The third digit indicates a sequential request number.
W# indicates write data for a corresponding request address (e.g., A#). For ease of readability, the number of specific write data sent from a master is identical to the number of the corresponding request address. Continuing with the example of the prior paragraph, write data W01 is sent from master M0 in association with a request address A01 that is sent by master M0.

Referring to FIG. 1, interconnects X0, X1, and X3 operate independently, thus there is no coordination between interconnects X0, X1, and X3 to order transactions initiated on each interconnect bus with respect to each other. Requests from a master that target a remote slave have to go through at least one round of arbitration at each of the several interconnects located between the master and the remote slave. In the exemplary transactions depicted in FIG. 1, a bus deadlock stemming from a circular dependency occurs when conventional arbitration techniques are applied to the following sequence of data transfers.

Master M0 sends requests having addresses A00, A01, A02, and A03 to slave S1 via master port MPT0, arbiter ARB2, interconnect X0, link L0, master port MPT4, arbiter ARB1, and interconnect X1. Master M0 also sends a request having the addresses A04 to slave S0 via master port MPT0, arbiter ARB0, and interconnect X0. Request address A00 of master M0 wins a first stage of arbitration in arbiter ARB2 at interconnect X0, yet address A00 must go through a second stage of arbitration in arbiter ARB1 at interconnect X1. Conventional techniques dictate that the data routing order for master M0 on interconnect X0 is defined prior to the arbitration of request address A00 on the interconnect X1. Conventional techniques do not define a data routing order across tiers (e.g., multiple interconnects) when a NoC/SoC has a cascade of interconnects (e.g., multi tier interconnects).

Then, Master M1 sends requests having addresses A19 to slave S1 via master port 1, arbiter ARB1, and interconnect X1. Master M1 also sends a request having address A15, A16, A17 and A18 to slave S0 via master port MPT1, arbiter ARB3, interconnect X1, link L1, master port MPT5, arbiter ARB0, and interconnect X0.

At this point in the sequence, the request having address A19 is ahead of requests having addresses A00, A01, A02, and A03 at the slave S1. Further, the request having the address A04 is ahead of requests having addresses A15, A16, A17, and A18 at the slave S0.

Master M0 attempts to send data having addresses W00, W01, W02, and W03 to slave S1 via master port MPT0, arbiter ARB2, interconnect X0, link L0, master port MPT4, arbiter ARB1, and interconnect X1. Master M0 also attempts to send data having the address W04 to slave S0 via master port MPT0, arbiter ARB0, and interconnect X0. However, as a result of the conventional arbitration techniques, write data W04 is stuck behind data having addresses W00, W01, W02, and W03 in the master M0, thus the corresponding request having address A04 at slave S0 cannot be fulfilled.

Master M1 attempts to send data having addresses W15, W16, W17, and W18 to slave S0 via master port 1, arbiter ARB1, and interconnect X1. Master M1 also attempts to send data having address W19 to slave S1 via master port MPT1, arbiter ARB3, interconnect X1, link L1, master port MPT5, arbiter ARB0, and interconnect X0. However, as a result of the conventional arbitration techniques, write data W19 is stuck behind data having addresses W15, W16, W17, and W18 in the master M1, thus the corresponding request having address A19 at slave S1 cannot be fulfilled. As a result, as shown in this example, applying conventional arbitration techniques results in a bus deadlock stemming from a circular dependency.

Accordingly, there are long-felt industry needs for methods and apparatus that improve upon conventional methods and apparatus, including apparatus and methods for transaction ordering to avoid bus deadlocks.

### SUMMARY

This summary provides an basic understanding of some aspects of the present teachings. This summary is not exhaustive in detail, and is neither intended to identify all critical features, nor intended to limit the scope of the claims.

Exemplary methods and apparatus for mitigating bus deadlocks are provided. An exemplary method includes defining a customized routing rule for data transport between a plurality of masters and a plurality of slaves via a plurality of interconnects, based on a network topology and a traffic profile. The defining of the customized routing table can be static or dynamic. The customized rule can allow a request address to arbitrate in a first phase of arbitration at an interconnect in the plurality of interconnects prior to receiving write data associated with the request address at the interconnect, and does not allow the request address to arbitrate during a subsequent second phase of arbitration unless the request address has corresponding write data. The customized rule can allow a first request address and a second request address to arbitrate at an interconnect in the plurality of interconnects prior to receiving respective write data associated with the first and second request addresses at the interconnect, where the first and second request addresses both target remote slaves. Further, the customized rule can block a local slave request address targeting a local slave until remote slave write data has been removed from a respective master port of an interconnect in the plurality of interconnects, if a remote slave address request targets a remote slave and the local slave address request is subsequent to the remote slave address request. In another aspect, the customized rule blocks a remote slave address request until after a local slave's write data is removed from a respective master port on an interconnect in the plurality of interconnects, if a local slave address request associated with the local slave's write data targets a local slave, the remote slave address request targets a remote slave, and the remote slave address request is received subsequent to the local slave address request.

In a further example, provided is a non-transitory computer-readable medium, comprising instructions stored thereon that, if executed by a processor, cause the processor to execute at least a part of the aforementioned method. The non-transitory computer-readable medium can be integrated with a device, such as a mobile device, a music player, a video player, an entertainment unit, a navigation device, a communications device, a personal digital assistant (PDA), a fixed location data unit, and/or a computer.

In another example, provided is an apparatus configured to mitigate bus deadlocks. The apparatus includes means for defining a customized routing rule for data transport between a plurality of masters and a plurality of slaves via a plurality of interconnects, based on a network topology and a traffic profile. The defining of the customized routing table can be static or dynamic. The customized rule can allow a request address to arbitrate in a first phase of arbitration at an interconnect in the plurality of interconnects prior to receiving write data associated with the request address the interconnect, and does not allow the request address to arbitrate during a subsequent second phase of arbitration unless the request address has corresponding write data. In another aspect, the customized rule can allow a first request address and a second request address to arbitrate at an interconnect in the plurality of interconnects prior to receiving respective write data associated with the first and second request addresses at the interconnect, where the first and second request addresses both target remote slaves. The customized rule can block a local slave request address targeting a local slave until remote slave write data has been removed from a respective master port of an interconnect in the plurality of interconnects, if a remote slave address request targets a remote slave and the local slave address request is subsequent to the remote slave address request. In a further example, the customized rule blocks a remote slave address request until after a local slave's write data is removed from a respective master port on an interconnect in the plurality of interconnects, if a local slave address request associated with the local slave's write data targets a local slave, the remote slave address request targets a remote slave, and the remote slave address request is received subsequent to the local slave address request.

At least a part of the apparatus can be integrated in a semiconductor die. Further, at least a part of the apparatus can be integrated with at least one of a device, such as a mobile device, a set top box, a music player, a video player, an entertainment unit, a navigation device, a communications device, a personal digital assistant (PDA), a fixed location data unit, a computer, an application specific integrated circuit, a part of a system on a chip (SoC) integrated circuit, a base station, a micro-controller, and/or a data processing device. In a further example, provided is a non-transitory computer-readable medium, comprising instructions stored thereon that, if executed by a lithographic device, cause the lithographic device to fabricate at least a part of the apparatus.

In another example, provided is an apparatus configured to mitigate bus deadlocks. The apparatus includes a processor configured to define a customized routing rule for data transport between a plurality of masters and a plurality of slaves via a plurality of interconnects, based on a network topology and a traffic profile. The defining of the customized routing table can be static or dynamic. The customized rule can allow a request address to arbitrate in a first phase of arbitration at a first interconnect in the plurality of interconnects prior to receiving write data associated with the request address at a second interconnect in the plurality of interconnects, and does not allow the request address to arbitrate during a subsequent second phase of arbitration unless the request address beats other competing address requests. The customized rule can allow a first request address and a second request address to arbitrate at an interconnect in the plurality of interconnects prior to receiving respective write data associated with the first and second request addresses at the interconnect, where the first and second request addresses both target remote slaves. The customized rule can block a local slave request address targeting a local slave until remote slave write data has been removed from a respective master port of an interconnect in the plurality of interconnects, if a remote slave address request targets a remote slave and the local slave address request is subsequent to the remote slave address request. In a further example, the customized rule blocks a remote slave address request until after a local slave's write data is removed from a respective master port on an interconnect in the plurality of interconnects, if a local slave address request associated with the local slave's write data targets a local slave, the remote slave address request targets a remote slave, and the remote slave address request is received subsequent to the local slave address request. The apparatus can be integrated with at least one of an application specific integrated circuit, a part of a system on a chip (SoC) integrated circuit, a base station, a micro-controller, and/or a data processing device.

At least a part of the apparatus can be integrated in a semiconductor die. Further, at least a part of the apparatus can be integrated with at least one of a device, such as a mobile device, a set top box, a music player, a video player, an entertainment unit, a navigation device, a communications device, a personal digital assistant (PDA), a fixed location data unit, a computer, an application specific integrated circuit, a part of a system on a chip (SoC) integrated circuit, a base station, a micro-controller, and/or a data processing device. In a further example, provided is a non-transitory computer-readable medium, comprising instructions stored thereon that, if executed by a lithographic device, cause the lithographic device to fabricate at least a part of the apparatus, such as an integrated circuit comprising a processor configured to dynamically defining a customized routing rule for data transport between a plurality of masters and a plurality of slaves via a plurality of interconnects, based on a network topology and traffic profile.

The foregoing broadly outlines some of the features and technical advantages of the present teachings in order that the detailed description and drawings can be better understood. Additional features and advantages are also described in the detailed description. The conception and disclosed embodiments can be readily utilized as a basis for modifying or designing other structures for carrying out the same purposes of the present teachings. Such equivalent constructions do not depart from the technology of the teachings as set forth in the claims. The novel features that are characteristic of the teachings, together with further objects and advantages, are better understood from the detailed description and the accompanying figures. Each of the figures is provided for the purpose of illustration and description only, and does not limit the present teachings.

### BRIEF DESCRIPTION OF THE DRAWINGS

The accompanying drawings are presented to describe examples of the present teachings, and are not limiting.
FIG. 1 depicts concerns about conventional methods and apparatus.
FIG. 2 depicts an exemplary communication system in which an embodiment of the disclosure may be advantageously employed.
FIG. 3 depicts an exemplary method and apparatus for transaction ordering to mitigate bus deadlocks.
FIG. 4 depicts an exemplary method for mitigating bus deadlocks.

In accordance with common practice, the features depicted by the drawings may not be drawn to scale. Accordingly, the dimensions of the depicted features may be arbitrarily expanded or reduced for clarity. In accordance with common practice, some of the drawings are simplified for clarity. Thus, the drawings may not depict all components of a particular apparatus or method. Further, like reference numerals denote like features throughout the specification and figures.

### DETAILED DESCRIPTION

### INTRODUCTION

Methods and apparatus for transaction ordering to avoid bus deadlocks are provided. An advantage provided by the exemplary apparatuses and methods disclosed herein is a reduction in bus deadlocks over conventional devices. A further advantage is that the exemplary apparatuses and methods disclosed herein mitigate the effects of bus deadlocks over conventional devices.

Examples of the current teachings are disclosed in this application's text and drawings. The examples advantageously address the long-felt industry needs, as well as other previously unidentified needs, and mitigate shortcomings of the conventional methods and apparatus. Alternate embodiments can be devised without departing from the scope of the invention. Additionally, conventional elements of the current teachings may not be described in detail, or may be omitted, to avoid obscuring aspects of the current teachings.

In the following description, certain terminology is used to describe certain features and is not limiting. As used herein, singular forms "a," "an," and "the" are intended to include plural forms as well, unless the context clearly indicates otherwise. Further, the terms "comprises," "comprising," "includes," and "including" specify a presence of stated features, integers, steps, operations, elements, and/or components, but do not preclude a presence and/or addition of one or more other features, integers, steps, operations, elements, components, and/or groups thereof.

Any reference herein to a feature using a designation such as "first," "second," and so forth does not limit a quantity and/or order of those features. Rather, these designations are used as a convenient method of distinguishing between two or more features and/or instances of an feature. Thus, a reference to first and second features does not require that only two features can be employed, or that the first feature must necessarily precede the second feature. Also, unless stated otherwise, a set of features can comprise one or more features. In addition, terminology of the form "at least one of: A, B, or C" used in the description or the claims can be interpreted as "A or B or C or any combination of these features."

As used herein, the term "exemplary" means "serving as an example, instance, or illustration." Any embodiment described as "exemplary" is not necessarily to be construed as preferred or advantageous over other embodiments. Likewise, the term "embodiments of the invention" does not require that all embodiments of the invention include the discussed feature, advantage, or mode of operation. Use of the terms "in one example," "an example," "in one feature," and/or "a feature" in this specification does not necessarily refer to the same feature and/or example. Furthermore, a particular feature and/or structure can be combined with one or more other features and/or structures.

It should be noted that the terms "connected," "coupled," or any variant thereof, mean any connection or coupling, either direct or indirect, between two or more elements, and can encompass a presence of one or more intermediate elements between two elements that are "connected" or "coupled" together. The coupling or connection between the elements can be physical, logical, or a combination thereof. As employed herein two elements can be considered to be "connected" or "coupled" together by the use of one or more wires, cables, and/or printed electrical connections, as well as by the use of electromagnetic energy, such as electromagnetic energy having wavelengths in the radio frequency region, the microwave region and/or the optical (both visible and invisible) region, as several non-limiting and non-exhaustive examples.

It should be understood that the term "signal" can include any signal such as a data signal, audio signal, video signal, and/or a multimedia signal. Information and signals can be represented using any of a variety of different technologies and techniques. For example, data, instructions, process step, commands, information, signals, bits, symbols, and/or chips that are referenced in this description can be represented by voltages, currents, electromagnetic waves, magnetic fields or particles, optical fields or particles, and any combination thereof.

The term "mobile device" includes, and is not limited to, a mobile phone, a mobile communication device, a personal digital assistant, a mobile palm-held computer, a wireless device, and/or other types of portable electronic devices typically carried by a person and/or having some form of communication capabilities (e.g., wireless, infrared, short-range radio, etc.).

### DESCRIPTION OF THE FIGURES

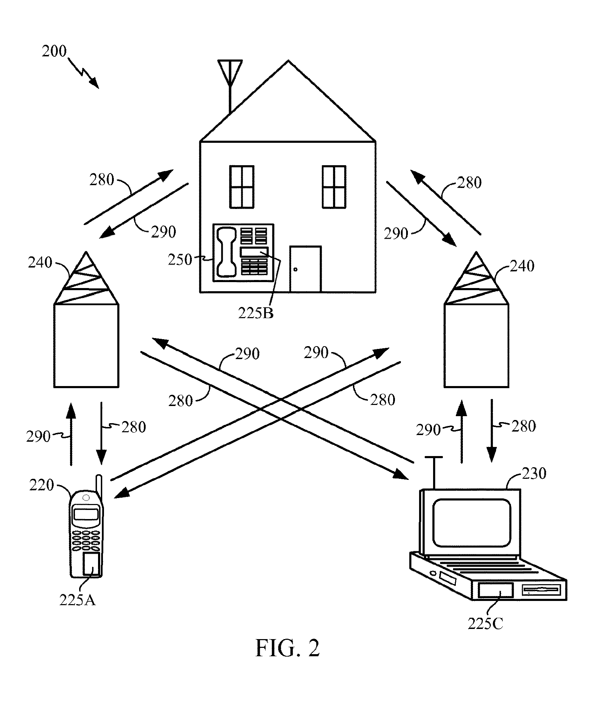

FIG. 2 depicts an exemplary wireless communication system 200 in which an embodiment of the disclosure may be advantageously employed. For purposes of illustration, FIG. 2 shows three remote units 220, 230, and 250, as well as two base stations 240. The wireless communication system 200 can have many more remote units and/or more base stations. The remote units 220, 230, and 250 include at least a part of an embodiment 225A-C of the disclosure as discussed further herein. FIG. 2 also shows forward link signals 280 from the base stations 240 and the remote units 220, 230, and 250, as well as reverse link signals 290 from the remote units 220, 230, and 250 to the base stations 240.

In FIG. 2, the remote unit 220 is shown as a mobile telephone, the remote unit 230 is shown as a portable computer, and the remote unit 250 is shown as a fixed location remote unit in a wireless local loop system. In examples, the remote unit 230 can be a mobile phone, a hand-held personal communication systems (PCS) unit, a portable data unit such as a personal data assistant, a GPS-enabled device, a navigation device, a settop box, a music player, a mobile device, a video player, an entertainment unit, any other device that stores and/or retrieves data or computer instructions, and/or any combination thereof. Although FIG. 2 illustrates remote units according to the teachings of the disclosure, the disclosure is not limited to these exemplary illustrated units. Embodiments of the disclosure may be suitably employed in any device that experiences the problems of the conventional techniques and/or can benefit from the advantages of the disclosed methods and devices.

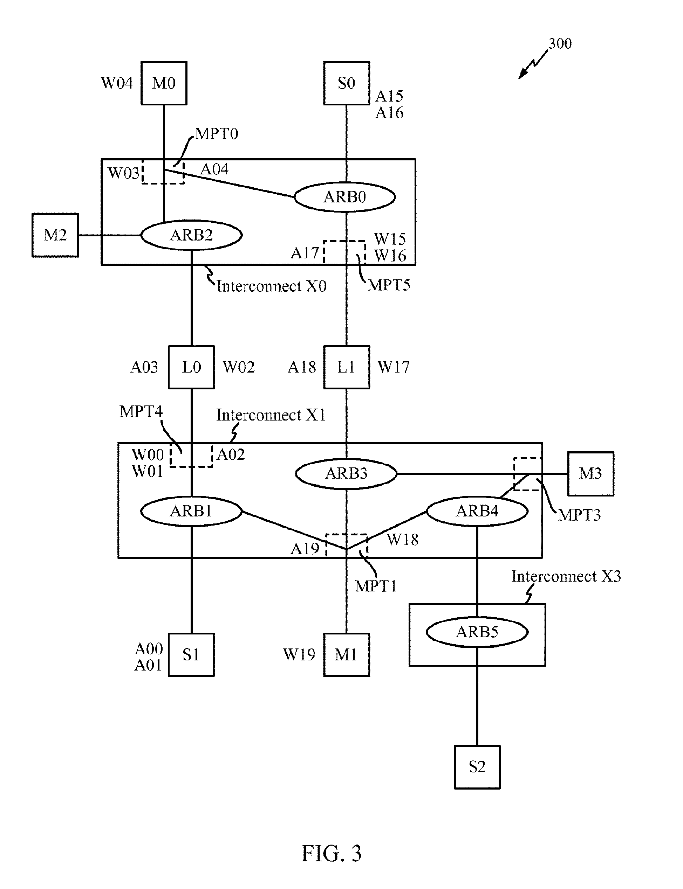

FIG. 3 depicts an exemplary method and apparatus for transaction ordering to mitigate bus deadlocks. Mitigating bus deadlocks requires routing requests in an order different from that of the conventional technique. Routing requests and data from a master on one interconnect bus to a slave on another interconnect bus benefits from the transaction ordering rules described herein. Based on a topology and traffic profile, defining custom rules for each master/slave provides advantages of improving bus performance and mitigating bus deadlocks.

In an exemplary embodiment, one solution to address the problems of the conventional techniques is to use a customized routing rule to direct each master port coupled to an interconnect to route traffic based on a slave crossing. For example, the customized routing rule can require that a master port must always block a current request from a respective master if the current request targets a different slave than a previous request from that respective master. The current request is blocked until the previous request's associated write data has been removed from the master port. This ensures requests do not get routed far on a path to the slave, in an absence of a clear path for routing the associated data to the slave. Further, no blocking of requests is done if consecutive requests target the same slave.

In another exemplary embodiment, request and data steering is performed by distinguishing between local slaves and remote slaves. For example, referring to FIG. 3, slave S0 is a local slave to master M0, since both local slave S0 and master M0 perform data transfers to each other via the same interconnect X0 without having to transfer data via a second interconnect (e.g., interconnect X1). Also, slave S1 is a remote slave for master M0, since data transfers between master M0 and slave S1 require transfer via more than one interconnect. Similarly, slave S1 is a local slave to master M1 and slave S0 is remote slave for master M1. During routing, at least one of the following customized routing rules is applied at a master port MPT# (e.g., a respective master port MPT for a master M#):
1. When a request targeting a remote slave must go through more than one arbitration phase and no data is available in the master port MPT, the request is allowed to arbitrate only in the first phase. Beyond the first phase of arbitration, the request cannot be arbitrated until the request has corresponding first data beat in arbitration or all data beat in arbitration. For example, in FIG. 3, the request address A00 can be sent to interconnect X1 via link L0 without write data W00 in master port MPT0, but when the request address A00 reaches master port MPT4, the request address A00 must wait for the write data W00 to be available in the master port MPT4 before the request address A00 can be arbitrated (via arbiter ARB1) to be sent to slave S1.
2. Two consecutive requests targeting the same or different remote slaves need not be blocked during the first phase of arbitration. For example, in FIG. 3, master M3 can ping-pong consecutive requests between slave S0 and slave S2 without waiting for corresponding write data to beat other queued data in arbitration.
3. When there are two consecutive requests, with the first targeting a remote slave and the second targeting a local slave, the local slave request is blocked until remote slave write data has been removed from a respective master port, since there is no guarantee that the remote slave request would win in a second phase of arbitration and will be at a head of a queue for the endpoint. For example, in FIG. 3, request address A04 will not be sent to slave S0 until write data W00, W01, W02, and W03 are removed from master port MPTO.
4. When there are two consecutive requests, with the first targeting a local slave and the second targeting a remote slave, the remote slave request is not blocked until the respective write data is removed from a respective master port. Even though the remote slave request has been forwarded to the remote slave, because of Rule #1 above, the remote slave request must wait on another interconnect.
5. A master that frequently (or always) targets local slaves and/or that frequently (or always) targets remote slaves is required to follow the above rules and can dispatch requests without waiting for data to be available in a respective interconnect MPT.

In an aspect, several rules can be defined per master, but all rules will not always apply. In certain cases, relaxing some rules for a master and/or a slave can improve throughput. Hardware configured to perform the techniques described herein can self-detect network topology, traffic profiles, and data flow, and change the rule set dynamically. Defining different rules and/or sets of sets of rules gives software flexibility to change a mode of operation.

In another example, during a Low Power Mode switching of rules, based on a status from slave(s) and other interconnect(s), a master can dynamically switch ordering rules to improve network performance and mitigate bus deadlocks.

An exemplary apparatus includes a processor coupled to at least one device depicted in FIG. 3. The processor can be configured to perform at least a portion of a method described herein.

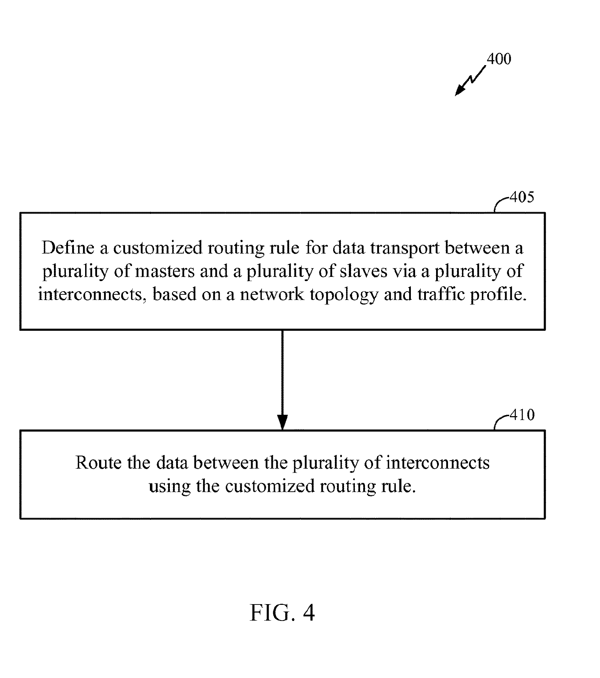

FIG. 4 depicts an exemplary method 400 for mitigating bus deadlocks. The method for mitigating bus deadlocks can be performed by the apparatus described hereby, such as the apparatus depicted in FIG. 3.

In step 405, a customized routing rule for data transport between a plurality of masters and a plurality of slaves via a plurality of interconnects is dynamically defined, based on a network topology and traffic profile. In examples, the customized routing rule can be at least one of the routing rules detailed herein (and can exclude conventional techniques).

In step 410, the data is routed between the plurality of interconnects using the customized routing rule.

In an exemplary embodiment, a circuit configured to perform at least a portion of a method described herein can be integrated with at least one of an application specific integrated circuit (ASIC), a part of a system on a chip (SoC) integrated circuit, a base station, a mobile device, a micro-controller, a data processing device, and/or a computer.

In some aspects, the teachings herein can be employed in a multiple-access system capable of supporting communication with multiple users by sharing the available system resources (e.g., by specifying one or more of bandwidth, transmit power, coding, interleaving, and so on). For example, the teachings herein can be applied to any one or combinations of the following technologies: Code Division Multiple Access (CDMA) systems, Multiple-Carrier CDMA (MCCDMA), Wideband CDMA (W-CDMA), High-Speed Packet Access (HSPA, HSPA+) systems, Time Division Multiple Access (TDMA) systems, Frequency Division Multiple Access (FDMA) systems, Single-Carrier FDMA (SC-FDMA) systems, Orthogonal Frequency Division Multiple Access (OFDMA) systems, or other multiple access techniques. A wireless communication system employing the teachings herein can be designed to implement one or more standards, such as IS-95, cdma2000, IS-856, W-CDMA, TDSCDMA, and other standards. A CDMA network can implement a radio technology such as Universal Terrestrial Radio Access (UTRA), cdma2000, or some other technology. UTRA includes W-CDMA and Low Chip Rate (LCR). The cdma2000 technology covers IS-2000, IS-95 and IS-856 standards. A TDMA network can implement a radio technology such as Global System for Mobile Communications (GSM). An OFDMA network can implement a radio technology such as Evolved UTRA (E-UTRA), IEEE 802.11, IEEE 802.16, IEEE 802.20, Flash-OFDM.RTM., etc. UTRA, E-UTRA, and GSM are part of Universal Mobile Telecommunication System (UMTS). The teachings herein can be implemented in a 3GPP Long Term Evolution (LTE) system, an Ultra-Mobile Broadband (UMB) system, and other types of systems. LTE is a release of UMTS that uses E-UTRA. UTRA, E-UTRA, GSM, UMTS and LTE are described in documents from an organization named "3rd Generation Partnership Project" (3GPP), while cdma2000 is described in documents from an organization named "3rd Generation Partnership Project 2" (3GPP2). Although certain aspects of the disclosure can be described using 3GPP terminology, it is to be understood that the teachings herein can be applied to 3GPP (e.g., Re199, Re15, Re16, Re17) technology, as well as 3GPP2 (e.g., 1xRTT, 1xEV-DO RelO, RevA, RevB) technology and other technologies. The techniques can be used in emerging and future networks and interfaces, including Long Term Evolution (LTE).

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, and/or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described generally in terms of their functionality. Whether such functionality is implemented as hardware and/or software depends upon a particular system's application and design constraints. Skilled artisans may implement the described functionality in varying ways for each particular application, but such implementation decisions should not be interpreted as causing a departure from the scope of the present invention.

At least a portion of the methods, sequences and/or algorithms described in connection with the embodiments disclosed herein may be embodied directly in hardware, in a software module executed by a processor, or in a combination of the two. In an example, a processor includes multiple discrete hardware components. A software module may reside in RAM memory, flash memory, ROM memory, EPROM memory, EEPROM memory, registers, hard disk, a removable disk, a CD-ROM, and/or any other form of storage medium known in the art. An exemplary storage medium can be coupled to a processor such that the processor can read information from, and write information to, the storage medium. In an alternative, the storage medium can be integral with the processor. An embodiment of the invention can include a computer readable media embodying a method described herein. Accordingly, the invention is not limited to illustrated examples and any means for performing the functionality described herein are included in embodiments of the invention. Embodiments can include a machine-readable media and/or a computer-readable media embodying instructions which, when executed by a processor, transform a processor and any other cooperating devices into a machine for performing a function described hereby.

Further, many embodiments are described in terms of sequences of actions to be performed by, for example, elements of a computing device. Various actions described herein can be performed by a specific circuit (e.g., an application specific integrated circuit (ASIC)), by program instructions being executed by one or more processors, or by a combination of both. Additionally, the sequence of actions described herein can be considered to be embodied entirely within any form of computer readable storage medium having stored therein a corresponding set of computer instructions that upon execution cause an associated processor to perform the functionality described herein. Thus, aspects of the invention may be embodied in a number of different forms, all of which have been contemplated to be within the scope of the claimed subject matter. In addition, for each of the embodiments described herein, a corresponding circuit of any such embodiments may be described herein as, for example, "logic configured to" perform a described action.

The disclosed devices and methods can be designed and can be configured into a computer-executable file that is in a Graphic Database System Two (GDSII) compatible format, an Open Artwork System Interchange Standard (OASIS) compatible format, and/or a GERBER (e.g., RS-274D, RS-274X, etc.) compatible format, which are stored on a computer-readable media. The file can be provided to a fabrication handler who uses the file to fabricate an integrated device with a lithographic device. In an example, the integrated device is fabricated on a semiconductor wafer. The semiconductor wafer can be cut into a semiconductor die and packaged into a semiconductor chip. The semiconductor chip can be employed in a device described herein (e.g., a mobile device).

Nothing stated or illustrated herein is intended to cause a dedication of any component, step, feature, object, benefit, advantage, or equivalent to the public, regardless of whether the component, step, feature, object, benefit, advantage, or equivalent is recited in the claims. While this disclosure describes exemplary embodiments of the invention, it should be noted that various changes and modifications can be made herein without departing from the scope of the invention as defined by the appended claims.

## Claims

1. A method for mitigating bus deadlocks at an interconnect device, comprising:
receiving, at the interconnect device (X0-X3), a first routing request having a first request address;
receiving, at the interconnect device (X0-X3), a second routing request having a second request address;
first phase arbitrating the first routing request against the second routing request prior to receiving, at the interconnect device (X0-X3), write data associated with the first request address; and
blocking second phase arbitrating of the first routing request at the interconnect device (X0-X3) until receiving, at the interconnect device (X0-X3), write data associated with the first request address.

2. The method of claim 1, further comprising:
receiving, at the interconnect device(X0-X3), the write data associated with the first request address; and
second phase arbitrating the first request address after receiving the write data associated with the first request address.

3. The method of claim 1, wherein the first phase arbitrating is performed prior to receiving second write data associated with the second request address, and wherein the first and second request addresses both target remote slave devices (SO-S2).

4. The method of claim 1, wherein the first request address is a remote slave device request address, the write data associated with the first request address is remote slave device write data, the second request address is a local slave device request address received subsequent to the first request address, and the method further comprises blocking the local slave device request address until the remote slave device write data has been removed from a respective master port (MPT0-MPT5) of the interconnect device (X0-X3).

5. The method of claim 1, wherein the first request address is a local slave device request address, the write data associated with the first request address is local slave device write data, the second request address is a remote slave device request address received subsequent to the first request address, and the method further comprises blocking the remote slave device request address until after the local slave device write data is removed from a respective master port (MPT0-MPT5) of the interconnect device (X0-X3).

6. An apparatus configured to mitigate bus at an interconnect device (X0-X3), comprising:
means for receiving, at the interconnect device (X0-X3), a first routing request having a first request address;
means for receiving, at the interconnect device (X0-X3), a second routing request having a second request address;
means for first phase arbitrating the first routing request against the second routing request prior to receiving, at the interconnect device (X0-X3), write data associated with the first request address; and
means for blocking second phase arbitrating of the first routing request at the interconnect device until receiving, at the interconnect device (X0-X3), write data associated with the first request address.

7. The apparatus of claim 6, further comprising:
means for receiving, at the interconnect device (X0-X3), the write data associated with the first request address; and
means for second phase arbitrating the first request address after receiving the write data associated with the first request address.

8. The apparatus of claim 6, wherein the first phase arbitrating is performed prior to receiving second write data associated with the second request address, and wherein the first and second request addresses both target remote slave devices (SO-S2).

9. The apparatus of claim 6, wherein the first request address is a remote slave device request address, the write data associated with the first request address is remote slave device write data, the second request address is a local slave device request address received subsequent to the first request address, and the apparatus further comprises means for blocking the local slave device request address until the remote slave device write data has been removed from a respective master port (MPT0-MPT5) of the interconnect device (X0-X3).

10. The apparatus of claim 6, wherein the first request address is a local slave address, the write data associated with the first request address is local slave device write data, the second request address is a remote slave device request address received subsequent to the first request address, and the apparatus further comprises means for blocking the remote slave device request address until after the local slave device write data is removed from a respective (MPT0-MPT5) port of the interconnect device (X0-X3).

11. The apparatus of claim 6, wherein at least a part of the apparatus is integrated on a semiconductor die.

12. The apparatus of claim 6, further comprising at least one of an application specific integrated circuit, a part of a system on a chip (SoC) integrated circuit, a base station, a mobile device, a micro-controller, a data processing device, or a computer, with which the apparatus is integrated.

13. A computer-readable medium, comprising processor-executable instructions stored thereon that are configured to cause the processor to execute the method according to any one of claims 1-5.

14. A non-transitory computer-readable medium, comprising:
lithographic device-executable instructions stored thereon that are configured to cause a lithographic device to fabricate a processor configured to:
receive, at an interconnect device, a first routing request having a first request address;
receive, at the interconnect device, a second routing request having a second request address;
first phase arbitrate the first routing request against the second routing request prior to receiving, at the interconnect device, write data associated with the first request address;
block second phase arbitrating of the first routing request at the interconnect device until receiving, at the interconnect device, write data associated with the first request address.
